# EUROPÄISCHE PATENTSCHRIFT

(11) **EP 3 762 576 B1**
(45) Veröffentlichungstag und Bekanntmachung des Hinweises auf die Patenterteilung: **04.05.2022**
(21) Anmeldenummer: 19711525.6
(22) Anmeldetag: 08.03.2019
(51) Int. Cl.: E21B 10/32

(54) **BOHRKOPF UND DIESEN UMFASSENDES BOHRSYSTEM**
DRILL HEAD AND INCORPORATED DRILLING SYSTEM
TÊTE DE FORAGE ET SYSTÈME DE FORAGE INCORPORÈ

(30) Priorität: 08.03.2018 DE 102018105340
(43) Veröffentlichungstag der Anmeldung: 13.01.2021
(73) Patentinhaber: MHWirth GmbH, 41812 Erkelenz (DE)
(72) Erfinder: WALLRAFEN, Bernd, 52511 Geilenkirchen (DE); KLEINEN, Torsten, 41812 Erkelenz (DE); SCHMITZ, Willi Theo, 41849 Wassenberg (DE)
(74) Vertreter: Zacco Norway AS
(86) Internationale Anmeldenummer: PCT/EP2019/055816
(87) Internationale Veröffentlichungsnummer: WO 2019/170847

(56) Entgegenhaltungen:
- GB-A- 2 242 379
- US-A- 5 141 063
- US-A1- 2004 124 011
- US-A1- 2007 007 043
- US-A1- 2007 102 195

## Beschreibung

Die Erfindung betrifft einen Bohrkopf, der im Betrieb um eine Drehachse rotierbar und der hinsichtlich seines wirksamen Bohrdurchmessers erweiterbar ist, mit einem Grundkörper, der eine mit mindestens einem Schneidwerkzeug bestückte Stirnseite umfasst, und mit mindestens einem Erweiterungsarm, der mit dem Grundkörper um eine Schwenkachse schwenkbar gekoppelt und zwischen einer rückgezogenen Position in einer den wirksamen Bohrdurchmesser um einen ersten Betrag erweiternden, ersten ausgerückten Position verschwenkbar ist, wobei der Erweiterungsarm eine mit zumindest einem Schneidwerkzeug bestückte Wirkseite umfasst.

Ein Bohrkopf mit diesen Merkmalen ist aus der KR 20060006754 bekannt. In der rückgezogenen Position ist das mindestens eine Schneidwerkzeug des Erweiterungsarms funktionslos, in der ausgerückten Position erfolgt im Betrieb eine der Bohrlochsohle nacheilende Durchmesserweiterung der mit dem Grundkörper niedergebrachten Bohrung. Das Dokument US 2007/102195 A1 zeigt ein Bohrkopf, der im Betrieb um eine Drehachse rotierbar und der hinsichtlich seines wirksamen Bohrdurchmessers erweiterbar ist.

Derartige Bohrköpfe finden beispielsweise bei Offshore-Gründungsbohrungen für Windkraftanlagen Verwendung.

In dem Bestreben, die Leistungsfähigkeit von Windkraftanlagen, insbesondere solcher, die Teil von sogenannter "Offshore-Windparks" sind, zu erhöhen, besteht ein Trend zu immer größeren Windkraftanlagen. Hiermit einhergehend müssen die Fundamente der Windkraftanlagen zur Aufnahme immer größer werdender Belastungen ausgelegt sein.

Um diese Anforderung zu erfüllen, ist es beispielsweise bekannt, als Fundament für eine Windkraftanlage mehrere, beispielsweise drei in einem Dreieck angeordnete Pfähle vorzusehen, die in den Meeresboden niedergebracht sind und aus der Wasseroberfläche herausragen. Die oberen Enden dieser Pfähle sind über eine Tragstruktur miteinander verbunden, auf welcher das untere Ende des Turms der Windkraftanlage verankert ist. Diese auch als "Tripods" bezeichneten Fundamente weisen unter anderem den Nachteil auf, dass aufgrund der benötigten Mehrzahl von Gründungsbohrungen der erforderliche Errichtungsaufwand erhöht ist.

Daher werden derzeit viele Windkraftanlagen im Offshore-Bereich eingesetzt, deren Türme jeweils am oberen Ende eines einzelnen Pfahlfundaments (auch als "Monopile" bezeichnet) verankert ist. Um die nötige Stabilität dieser Pfahlfundamente zu erzielen, weisen diese im Unterwasserbereich zumindest über die Länge, über die sie in den Meeresgrund eingebracht sind, einen Durchmesser auf, der größer ist, als der Durchmesser des jeweiligen oberen Endes, an dem der Turm der Windkraftanlage verankert ist. Diese Pfahlfundamente umfassen daher oftmals einen "Flaschenhals", über welchen die beiden Bereiche unterschiedlicher Durchmesser ineinander übergehen.

Zum Niederbringen dieser Pfahlfundamente ist es regelmäßig erforderlich, innerhalb des Pfahls befindlichen Meeresgrund auszubohren. Hierzu muss ein Bohrkopf durch den Bereich kleineren Durchmessers von oben ins Innere des Pfahlfundaments eingeführt werden. Es ist daher erforderlich, einen Bohrkopf der eingangsbeschriebenen Art einzusetzen, dessen wirksamer Bohrdurchmesser erweiterbar ist.

Der Erfindung liegt die Aufgabe zugrunde, einen Bohrkopf zu schaffen, der zur vorgeschriebenen Verwendung verbessert ist.

Diese Aufgabe wird durch den in Anspruch 1 wiedergegebenen Bohrkopf gelöst.

Der erfindungsgemäße Bohrkopf ist derart ausgebildet, dass die Wirkseite des Erweiterungsarms in der zurückgezogenen Position mit der Stirnseite des Grundkörpers zumindest nahezu auf einer Ebene liegt. Unter "zumindest nahezu" ist zu verstehen, dass zwischen der Wirkseite des Erweiterungsarms und der Stirnseite des Grundkörpers kein Stufenversatz vorhanden sein soll, der größer als die Ausdehnung der Schneidwerkzeuge in Richtung der Drehachse ist.

Aufgrund dieser Ausbildung kann bei dem erfindungsgemäßen Bohrkopf das mindestens eine Schneidwerkzeug des mindestens einen Erweiterungsarms auch in dessen rückgezogener Position zum Abtrag von Boden an der Bohrlochsohle dienen. Hierdurch ist die mit dem erfindungsgemäßen Bohrkopf erzielbare Bohrleistung im Vergleich zu den zum Stand der Technik gehörenden Bohrköpfen, bei denen das mindestens eine Schneidwerkzeug des mindestens einen Erweiterungsarms in dessen rückgezogener Position funktionslos ist, erhöht.

Der erfindungsgemäße Bohrkopf ist des Weiteren derart ausgebildet, dass sich die Wirkseite in der ersten ausgerückten Position des Erweiterungsarms in Richtung der Drehachse zumindest nahezu stufenversatzfrei an die Stirnseite des Grundkörpers anschließt.

Mit "zumindest nahezu stufenversatzfrei" ist gemeint, dass der Stufenversatz nicht größer als die Ausdehnung der Schneidwerkzeuge in Richtung der Drehachse sein soll. Stufenversatzfrei bedeutet nicht, dass die Wirk- und Stirnseiten parallel zueinander ausgerichtet sein müssen. Vielmehr kann die Wirkseite gegenüber der Stirnseite geneigt sein.

Aufgrund dieser Ausbildung arbeitet das mindestens eine Schneidwerkzeug des mindestens einen Erweiterungsarms in der ersten ausgerückten Position in einer Ebene, die zumindest nahezu stufenversatzfrei in die Ebene mündet, auf der das zumindest eine Schneidwerkzeug des Grundkörpers arbeitet. Hierdurch wird beim Niederbringen der Bohrung mit in der ersten ausgerückten Position befindlichem Erweiterungsarm eine Bohrlochsohle ohne horizontalen Stufenversatz des erweiterten Durchmessers erreicht, der mit dem mindestens einen Erweiterungsarm geschaffene Bereich der Bohrlochsohle kann aber gegenüber demjenigen Bereich, der mit dem Grundkörper geschaffen worden ist, geneigt sein

Bei Bohrungen, die mit gattungsgemäßen Bohrköpfen niedergebracht werden, eilt der mit dem Grundkörper des Bohrkopfes vorgetriebene Bereich der Bohrlochsohle demjenigen mit dem Erweiterungsarm vorgetriebene Bereich vor. Da dieser für das Niederbringen des Pfahlfundaments jedoch nicht erforderlich ist, ist der mit den gattungsgemäßen Bohrköpfen erforderliche Aufwand durch vermeidbare Bohrzeiten und vermeidbare Mengen an auszubringendem Bohrgut erhöht, was mit dem erfindungsgemäßen Bohrkopf vermieden wird.

Bei einer bevorzugten Weiterbildung des erfindungsgemäßen Bohrkopfes ist der mindestens eine Erweiterungsarm in eine den wirksamem Bohrdurchmesser des Bohrkopfes um einen zweiten Betrag erweiternde, zweite ausgerückte Position verschwenkbar. Aufgrund dieser Ausbildung des Bohrkopfes ist es möglich, zunächst durch das Innere des Pfahlfundaments eine Bohrung bis zum unteren Ende des Pfahlfundaments mit einem um den ersten Betrag erweiterten wirksamen Bohrdurchmesser vorzutreiben und anschließend die Bohrung mit dem um den zweiten Betrag erweiterten wirksamen Bohrdurchmesser weiterzutreiben. Hierdurch kann das Einbringen der Pfahlfundamente bis auf die geförderte Endteufe wesentlich erleichtert werden. Der um den zweiten Betrag erweiterte, wirksame Bohrdurchmesser ist zu diesem Zwecke vorzugsweise derart gewählt, dass er zumindest dem Außendurchmesser des Pfahlfundaments entspricht.

Bei einer weiteren bevorzugten Ausführungsform des erfindungsgemäßen Bohrkopfes weist die Wirkseite des mindestens einen Erweiterungsarms zur Stirnseite des Grundkörpers in der ersten und/oder zweiten ausgerückten Position einen Winkel zwischen 20° und 45°, von der Stirnseite zum Grundkörper geneigt, auf. Aufgrund dieser Maßnahme steigt der von dem mindestens einen Erweiterungsarm geschaffene Bereich der Bohrlochsohle gegenüber dem von dem Grundkörper geschaffenen Bereich etwa um denselben Winkel an. Überraschenderweise hat sich gezeigt, dass auf diese Weise das gelockerte Bohrgut besonders effektiv von der Bohrlochsohle abtransportiert und somit die Reibung des Bohrkopfes während des Niederbringens der Bohrung reduziert werden kann. Hierdurch zeichnet sich diese bevorzugte Ausführungsform durch einen besonders geringen Energiebedarf zum Niederbringen der Bohrung und einen besonders geringen Verschleiß des Bohrkopfes und insbesondere der Schneidwerkzeuge auf.

Bei der Ausführungsform des erfindungsgemäßen Bohrkopfes ist ein Schließelement vorgesehen, welches eine zwischen der Stirnseite und der Wirkseite in der ersten und/oder in der zweiten ausgerückten Position des Erweiterungsarms entstehende Freifläche zumindest im Wesentlichen schließt. Hierdurch wird vermieden, dass durch diese Freifläche Bohrgut in Bereiche des Bohrkopfes eindringen kann, das ein Rückverlagern des mindestens einen Erweiterungsarms in seine rückgezogene Position blockiert, was ein Herausverlagern des Bohrkopfes aus der Bohrung erschweren oder sogar unmöglich machen könnte.

Bei einer bevorzugten Ausführungsform des erfindungsgemäßen Bohrkopfes weist der mindestens eine Erweiterungsarm eine der Drehachse des Bohrkopfes zugewandte Seite auf. Im Bereich dieser Seite ist ein erstes Ende eines Betätigungshebels um eine etwa parallel zur Schwenkachse verlaufende Achse verschiebbar an dem Erweiterungsarm angelenkt, wobei ein zweites Ende des Betätigungshebels entlang einer sich quer zur Achse erstreckenden Führung verlagerbar an dem Grundkörper angelenkt ist. Aufgrund dieser Ausgestaltung ist der mindestens eine Erweiterungsarm besonders stabil mit dem Grundkörper gekoppelt, sodass auch bei einem Niederbringen von Bohrungen in felsigem Gestein auf den mindestens einen Erweiterungsarm in der ersten oder zweiten ausgerückten Position wirkende Kräfte beschädigungsfrei in den Grundkörper eingeleitet werden können.

Zur Verlagerung des mindestens einen Erweiterungsarms zwischen der rückgezogenen sowie der ersten und/oder zweiten ausgerückten Position ist vorzugsweise ein Linearmotor vorgesehen, der mit einem ersten Ende an dem Grundkörper und mit einem zweiten Ende an dem Betätigungshebel angelenkt ist. Der Begriff "Linearmotor" ist nicht auf elektrisch betriebene Motoren beschränkt zu verstehen, sondern weit auszulegen. Insbesondere sollen hierunter auch Hydraulik- oder Pneumatikzylinder verstanden werden. Bei einer besonders bevorzugten Ausführungsform des erfindungsgemäßen Bohrkopfes ist ein Hydraulikzylinder vorgesehen, der mit einem ersten Ende an dem Grundkörper und mit einem zweiten Ende an dem Betätigungshebel angelenkt ist.

Bei einer besonders bevorzugten Weiterbildung des erfindungsgemäßen Bohrkopfes ist der Betätigungshebel derart konstruiert, das er das Schließelement bildet. Der konstruktive Aufwand, der mit einem zusätzlichen Schließelement verbunden wäre, wird hierdurch vermieden.

Besonders geeignet zum Niederbringen von Bohrungen auch in felsigem Untergrund geeignet ist der erfindungsgemäße Bohrkopf dann, wenn - wie bevorzugt - zumindest ein Teil der Schneidwerkzeuge als Rollendrehmeißel ausgebildet ist.

Für die Verwendung zum Einbringen von Pfahlfundamenten für Windkraftanlagen im Offshore-Bereich besonders geeignet ist der erfindungsgemäße Bohrkopf dann, wenn dessen Grundkörper und der mindestens eine Erweiterungsarm derart ausgebildet ist, dass der wirksame Bohrdurchmesser im Bereich von 5000 und 8000 mm erweiterbar ist. Bei einer Ausführungsform des erfindungsgemäßen Bohrkopfes kann beispielsweise der wirksame Bohrdurchmesser bei einer zurückgezogenen Position des mindestens einen Erweiterungsarms 5150 mm, bei der um den ersten Betrag erweiternden ersten ausgerückten Position 6800 und bei der um den zweiten Betrag erweiternden, zweiten ausgerückten Position 7400 mm betragen.

Die Erfindung betrifft auch ein Bohrsystem, das eine Drehvorrichtung, einen Tragstrang und einen erfindungsgemäßen Bohrkopf umfasst, der mit dem Trag strang gekoppelt ist.

In der Zeichnung ist - rein schematisch - ein Ausführungsbeispiel eines erfindungsgemäßen Bohrkopfes dargestellt. Es zeigen:
- Fig. 1: eine Seitenansicht des Ausführungsbeispiels des erfindungsgemäßen Bohrkopfes in einem Bereich eines Pfahles kleinen Durchmessers mit in rückgezogenen Positionen befindlichen Erweiterungsarmen;
- Fig. 2: dieses Ausführungsbeispiel des Bohrkopfes mit in rückgezogenen Positionen befindlichen Erweiterungsarmen in einer Ansicht gemäß Fig. 1 von unten;
- Fig. 3: dasselbe Ausführungsbeispiel des erfindungsgemäßen Bohrkopfes in dem Bereich größeren Durchmessers des Pfahles mit in einer ersten ausgerückten Position befindlichen Erweiterungsarmen in einer Fig. 1 entsprechenden Ansicht;
- Fig. 4: dasselbe Ausführungsbeispiel des erfindungsgemäßen Bohrkopfes in einer Position unterhalb des unteren Endes des Pfahles mit in einer zweiten ausgerückten Position befindlichen Erweiterungsarmen in einer Fig. 3 entsprechenden Ansicht; sowie

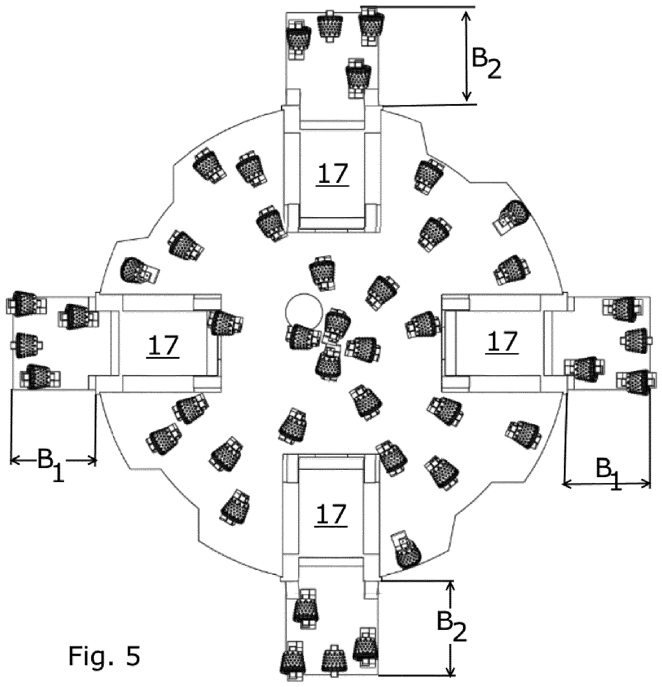

- Fig. 5: dasselbe Ausführungsbeispiel des erfindungsgemäßen Bohrkopfes in einer Ansicht von unten, wobei die sich waagerecht erstreckenden Erweiterungsarme in der ersten ausgerückten Position und die sich senkrecht erstreckenden Erweiterungsarme in der zweiten ausgerückten Position befinden.

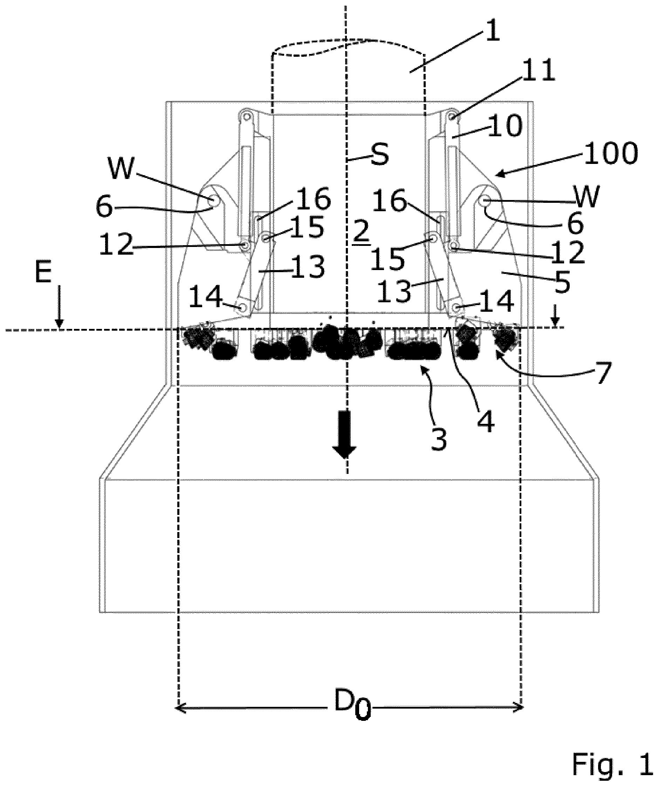

Das in der Zeichnung als Ganzes mit 100 bezeichnete Ausführungsbeispiels eines erfindungsgemäßen Bohrkopfes (nachfolgend kurz mit "Bohrkopf 100" bezeichnet) ist im Betrieb mit einem in der Fig. 1 angedeuteten Tragstrang 1 gekoppelt, der mithilfe einer in der Zeichnung nicht dargestellten Drehvorrichtung in eine Rotation um eine Drehachse S versetzbar ist. Der Bohrkopf 100 ist somit im Betrieb um die Drehachse S rotierbar.

Der Bohrkopf weist einen Grundkörper 2 auf, der eine mit einer Mehrzahl von Schneidwerkzeugen 3 bestückte Stirnseite 4 umfasst.

Ferner weist der Bohrkopf 100 Erweiterungsarme 5 auf, die - bezogen auf ihre Mittelebenen - um 90° versetzt in Drehrichtung angeordnet sind. Jeder Erweiterungsarm 5 ist mittels eines Bolzens 6, der eine Schwenkachse W definiert, um die der jeweilige Erweiterungsarm verschwenkbar ist, mit dem Grundkörper 2 gekoppelt. Die Schwenkachsen W sind senkrecht zur Drehachse S ausgerichtet.

Jeder Erweiterungsarm 5 umfasst eine mit mehreren Schneidwerkzeugen 7 bestückte Wirkseite 8.

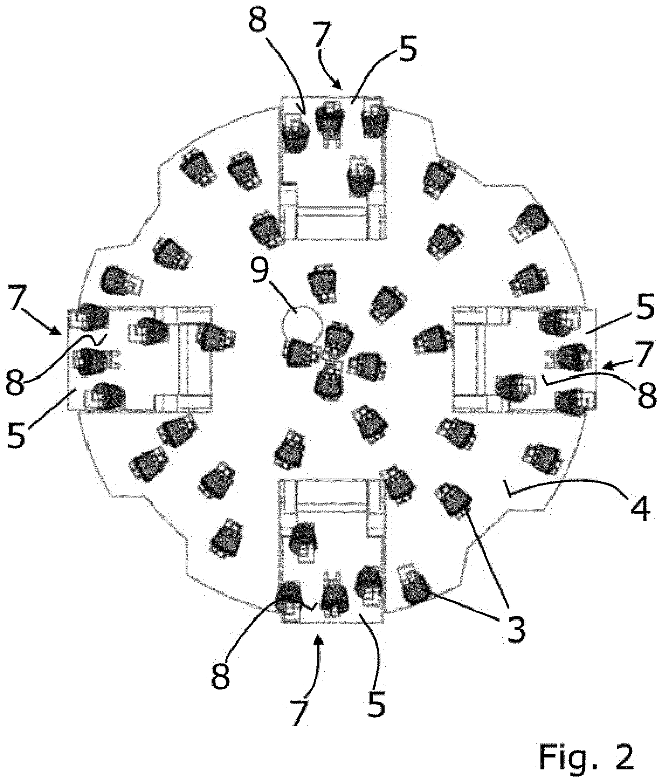

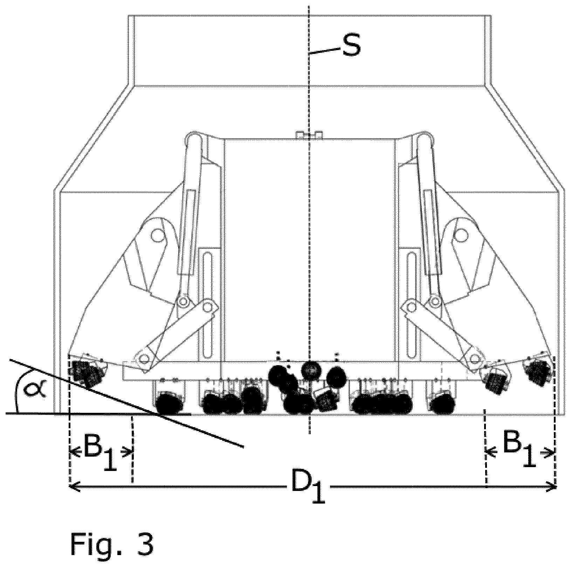

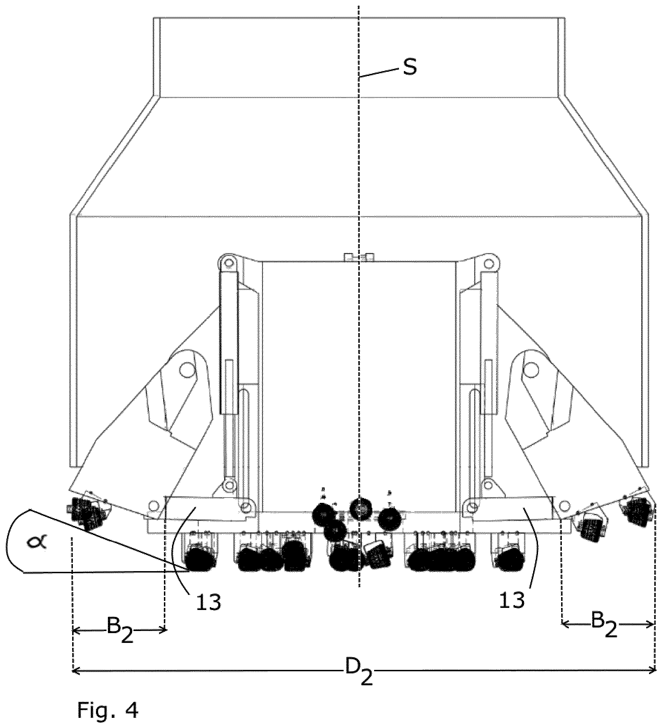

Jeder Erweiterungsarm 5 kann zwischen einer in Fig. 1 und 2 dargestellten, rückgezogenen Position, bei welcher jede Wirkseite 8 mit der Stirnseite 4 zumindest nahezu auf einer Ebene E liegt und der Bohrkopf einen wirksamen Bohrdurchmesser D₀ (siehe Fig. 1) aufweist, einer ersten ausgerückten Position, in welcher der wirksame Bohrdurchmesser D₁ um einen ersten Betrag B₁ erweitert ist (siehe Fig. 3) und einer zweiten ausgerückten Position um die Schwenkachsen W verschwenkt werden, in welcher der wirksame Bohrdurchmesser D₂ um einen zweiten Betrag B2 erweitert ist (siehe Fig. 4).

Wie in den Figuren 3 und 4 erkennbar ist, erstrecken sich die Wirkseiten 8 der Erweiterungsarme 5 nur in der ersten, ausgerückten Position (Fig. 3), als auch in der zweiten ausgerückten Position (Fig. 4) bezogen auf die Richtung der Drehachse S zumindest nahezu stufenversatzfrei von der Stirnseite 4 des Grundkörpers 2.

Bei in den ersten ausgerückten Positionen und bei in den zweiten ausgerückten Positionen befindlichen Erweiterungsarmen 5 weisen die Wirkseiten 8 jeweils einen Winkel α zwischen 20° und 45°, vorzugsweise von etwa 37° zur Stirnseite 4 des Grundkörpers 2 auf. Auf diese Weise wird bewirkt, dass Bohrgut, welches mithilfe der Schneidwerkzeuge 7 der Erweiterungsarme 5 abgetragen worden ist, unter Wirkung der Schwerkraft in Richtung der Bohrungsmitte gelangen und so einfacher beispielsweise durch Ansaugung über eine in der Stirnseite 4 des Grundkörpers 2 befindliche Absaugöffnung 9 ausgebracht werden kann.

Um die Erweiterungsarme 5 zwischen der rückgezogenen und den ersten und zweiten ausgerückten Positionen verschwenken zu können, ist für jeden Erweiterungsarm 5 ein Hydraulikzylinder 10 vorgesehen. Jeder Hydraulikzylinder ist mit einem ersten Ende 11 an dem Grundkörper 2 und in einem zweiten Ende 12 an einem Betätigungshebel 13 angelenkt.

Jeder Betätigungshebel 13 ist mit einem ersten Ende 14 im Bereich einer zur Drehachse S weisenden Seite eines Erweiterungsarms 5 angelenkt. Ein zweites Ende 15 des Betätigungshebels 13 ist in einer Führung 16 parallel zur Drehachse S verschiebbar an dem Grundkörper 2 gelagert.

Wie durch Vergleich der Figuren 1, 3 und 4 erkennbar wird, führen Längenveränderungen der Hydraulikzylinder mithilfe dieser Anordnung zu Schwenkbewegungen der Erweiterungsarme 5 um die Schwenkachsen W.

Die Betätigungshebel 13 sind derart ausgebildet, dass sie Freiflächen, die zwischen der Stirnseite 4 des Grundkörpers 2 und den Wirkseiten 8 der Erweiterungsarme 5 in den ersten und zweiten ausgerückten Positionen entstehen, zumindest im Wesentlichen verschließen. Sie dienen somit zugleich der Bildung von Schließelementen 17, die ein Eindringen von Bohrgut in den Grundkörper 2 und ein möglicherweise dadurch bedingtes Blockieren der Erweiterungsarme 5 verhindern.

### Bezuaszeichenliste:

- 100: Bohrkopf
- 1: Tragstrang
- 2: Grundkörper
- 3: Schneidwerkzeuge
- 4: Stirnseite
- 5: Erweiterungsarme
- 6: Bolzen
- 7: Schneidwerkzeuge
- 8: Wirkseite
- 9: Absaugöffnung
- 10: Hydraulikzylinder
- 11: erstes Ende
- 12: zweites Ende
- 13: Betätigungshebel
- 14: erstes Ende
- 15: zweites Ende
- 16: Führung
- 17: Schließelemente

- B₁, B₂: Beträge
- D₀, D₁, D₂: Durchmesser
- E: Ebene
- S: Drehachse
- W: Schwenkachse
- A: Winkel

## Patentansprüche

1. Bohrkopf (100), der im Betrieb um eine Drehachse (S) rotierbar und der hinsichtlich seines wirksamen Bohrdurchmessers (D₀, D₁, D₂) erweiterbar ist,
mit einem Grundkörper (2), der eine mit mindestens einem Schneidwerkzeug (3) bestückte Stirnseite (4) umfasst,
und mit mindestens einem Erweiterungsarm (5), der mit dem Grundkörper (2) um eine Schwenkachse (W) schwenkbar gekoppelt und zwischen einer rückgezogenen Position und einer den wirksamen Bohrdurchmesser um einen ersten Betrag (B₁) erweiternden, ersten ausgerückten Position verschwenkbar ist, wobei der mindestens eine Erweiterungsarm (5) eine mit zumindest einem Schneidwerkzeug (7) bestückte Wirkseite (8) umfasst,
die Wirkseite (8) in der zurückgezogenen Position des mindestens einen Erweiterungsarms (5) mit der Stirnseite (4) des Grundkörpers (2) zumindest nahezu auf einer Ebene (E) liegt,
und die Wirkseite (8) sich in der ersten ausgerückten Position des mindestens einen Erweiterungsarms (5) in Richtung der Drehachse (S) zumindest nahezu stufenversatzfrei von der Stirnseite (4) des Grundkörpers (2) erstreckt, **dadurch gekennzeichnet, dass** ein Schließelement (17) vorgesehen ist, welches eine zwischen der Stirnseite (4) und der Wirkseite (8) in der ersten oder in der zweiten ausgerückten Position des mindestens einen Erweiterungsarms (5) entstehende Freifläche zumindest im Wesentlichen schließt.

2. Bohrkopf nach Anspruch 1, **dadurch gekennzeichnet, dass** der mindestens eine Erweiterungsarm (5) in einer dem wirksamen Bohrdurchmesser um einen zweiten Betrag (B₂) erweiternde, zweite ausgerückte Position verschwenkbar ist.

3. Bohrkopf nach Anspruch 1 oder 2, **dadurch gekennzeichnet, dass** die Wirkseite (8) des mindestens einen Erweiterungsarms (5) zur Stirnseite (4) des Grundkörpers (2) in der ersten und/oder zweiten ausgerückten Position einen Winkel (α) zwischen 20° und 45°, von der Stirnseite (4) zum Grundkörper (2) hingeneigt, aufweist.

4. Bohrkopf nach einem der Ansprüche 1 bis 3, **dadurch gekennzeichnet, dass** der mindestens eine Erweiterungsarm (5) eine der Drehachse (S) zugewandte Seite aufweist, dass im Bereich dieser Seite ein erstes Ende (14) eines Betätigungshebels (13) um eine etwa parallel zur Schwenkachse verlaufende Achse verschwenkbar an dem mindestens einen Erweiterungsarm (5) angelenkt ist, und dass ein zweites Ende (15) des Betätigungshebels (13) entlang einer Führung (16) verlagerbar an dem Grundkörper (2) angelenkt ist.

5. Bohrkopf nach Anspruch 4, **dadurch gekennzeichnet, dass** ein Linearmotor vorgesehen ist, der mit einem ersten Ende (11) an dem Grundkörper (2) und mit einem zweiten Ende (12) an dem Betätigungshebel (13) angelenkt ist, wobei der Linearmotor vorzugsweise einen Pneumatik- und besonders bevorzugt einen Hydraulikzylinder (10) umfasst.

6. Bohrkopf nach einem der Ansprüche 4 bis 5, **dadurch gekennzeichnet, dass** der Betätigungshebel (13) derart dimensioniert ist, das er das Schließelement (17) bildet.

7. Bohrkopf nach einem der Ansprüche 1 bis 6, **dadurch gekennzeichnet, dass** zumindest ein Teil der Schneidwerkzeuge (3, 7) als Rollendrehmeißel ausgebildet ist.

8. Bohrkopf nach einem der Ansprüche 1 bis 7, **dadurch gekennzeichnet, dass** der wirksame Bohrdurchmesser von 5000 auf 8000 mm erweiterbar ist.

9. Bohrsystem, dass eine Drehvorrichtung und einen Tragstrang (1) umfasst, **dadurch gekennzeichnet, dass** das Bohrsystem ferner einen Bohrkopf (100) nach einem der Ansprüche 1 bis 8 umfasst, der mit dem Tragstrang (1) gekoppelt ist.

## Claims

1. A drill head (100) which, during the operation, can be rotated about a rotational axis (S) and which can be expanded with respect to its active drill diameter (D₀, D₁, D₂),
with a base body (2) which comprises an end side (4) equipped with at least one cutting tool (3),
and with at least one expansion arm (5) which is coupled to the base body (2) in a pivotal manner about a pivot axis (W) and can be pivoted between a retracted position and a first deployed position which expands the active drill diameter by a first amount (B₁),
wherein the at least one expansion arm (5) comprises an active side (8) equipped with at least one cutting tool (7),
the active side (8) in the retracted position of the at least one expansion arm (5) lies at least almost on a level (E) with the end side (4) of the base body (2), and the active side (8) extends in the first deployed position of the at least one expansion arm (5) in the direction of the rotational axis (S) at least almost in a step offset-free manner from the end side (4) of the base body (2), **characterized in that** a closing element (17) is provided which at least substantially closes a free space occurring between the end side (4) and the active side (8) in the first or in the second deployed position of the at least one expansion arm (5).

2. A drill head according to claim 1, **characterized in that** the at least one expansion arm (5) can be pivoted to a second deployed position which expands the active drill diameter by a second amount (B₂).

3. A drill head according to claim 1 or 2, **characterized in that** the active side (8) of the at least one expansion arm (5) to the end side (4) of the base body (2) in the first and/or second deployed position has an angle (a) between 20° and 45°, inclined from the end side (4) to the base body (2).

4. A drill head according to any one of claims 1 to 3, **characterized in that** the at least one expansion arm (5) has a side facing the rotational axis (S), that, in the region of this side, a first end (14) of an actuating lever (13) is articulated on the at least one extension arm (5) in a pivotal manner about an axis running approximately parallel to the pivot axis, and that a second end (15) of the actuating lever (13) is articulated in a displaceable manner on the base body (2) along a guide (16).

5. A drill head according to claim 4, **characterized in that** a linear motor is provided, which is articulated with a first end (11) on the base body (2) and articulated with a second end (12) on the actuating lever (13), wherein the linear motor comprises preferably a pneumatic and particularly preferably a hydraulic cylinder (10).

6. A drill head according to any one of claims 4 to 5, **characterized in that** the actuating lever (13) is dimensioned in such a way that it forms the closing element (17).

7. A drill head according to any one of claims 1 to 6, **characterized in that** at least a part of the cutting tools (3, 7) is designed as rotary turning tools.

8. A drill head according to any one of claims 1 to 7, **characterized in that** the active drill diameter can be expanded from 5000 to 8000 mm.

9. A drill system comprising a rotary device and a support string (1), **characterized in that** the drill system further comprises a drill head (100) according to any one of claims 1 to 8, which is coupled to the support string (1).

## Revendications

1. Tête de forage (100) qui, pendant le fonctionnement, peut tourner autour d'un axe de rotation (S) et qui peut être étendue par rapport à son diamètre de foret actif (D₀, D₁, D₂),
avec un corps de base (2) qui comprend un côté d'extrémité (4) équipé d'au moins un outil de coupe (3),
et avec au moins un bras d'expansion (5) qui est couplé de manière pivotante au corps de base (2) autour d'un axe de pivotement (W) et qui peut pivoter entre une position rétractée et une première position déployée qui étend le diamètre de foret actif d'une première quantité (B₁),
dans lequel l'au moins un bras d'extension (5) comprend un côté actif (8) équipé d'au moins un outil de coupe (7),
le côté actif (8) dans la position rétractée de l'au moins un bras d'expansion (5) se trouve au moins presque sur un niveau (E) avec le côté d'extrémité (4) du corps de base (2),
et le côté actif (8) s'étend dans la première position déployée de l'au moins un bras d'expansion (5) dans la direction de l'axe de rotation (S) au moins d'une manière presque sans décalage de niveau à partir du côté d'extrémité (4) du corps de base (2), **caractérisée en ce qu'**il est prévu un élément de fermeture (17) qui ferme au moins essentiellement un espace libre se produisant entre le côté d'extrémité (4) et le côté actif (8) dans la première ou dans la deuxième position déployée de l'au moins un bras d'expansion (5).

2. Tête de forage selon la revendication 1, **caractérisée en ce que** l'au moins un bras d'extension (5) peut être pivoté dans une deuxième position dégagée qui élargit le diamètre de forage effectif d'une deuxième valeur (B₂).

3. Tête de forage selon la revendication 1 ou 2, **caractérisée en ce que** le côté actif (8) de l'au moins un bras d'extension (5) au côté d'extrémité (4) du corps de base (2) dans la première et / ou la deuxième position déployée présente un angle (a) compris entre 20° et 45°, incliné du côté d'extrémité (4) au corps de base (2).

4. Tête de forage selon l'une des revendications 1 à 3, **caractérisée en ce que** l'au moins un bras d'extension (5) présente un côté faisant face à l'axe de rotation (S), que dans la région de ce côté, une première extrémité (14) d'un levier d'actionnement (13) est articulée à l'au moins un bras d'extension (5) de manière pivotante autour d'un axe s'étendant approximativement parallèlement à l'axe de pivotement, et qu'une deuxième extrémité (15) du levier d'actionnement (13) est articulée de manière déplaçable sur le corps de base (2) le long d'un guide (16).

5. Tête de forage selon la revendication 4, **caractérisée en ce qu'**il est prévu un moteur linéaire qui est articulé avec une première extrémité (11) au corps de base (2) et avec une deuxième extrémité (12) au levier d'actionnement (13), le moteur linéaire comprend de préférence un cylindre pneumatique et de manière particulièrement préférée un cylindre hydraulique (10).

6. Tête de forage selon l'une des revendications 4 à 5, **caractérisée en ce que** le levier d'actionnement (13) est dimensionné de manière à former l'élément de fermeture (17).

7. Tête de forage selon l'une des revendications 1 à 6, **caractérisée en ce qu'**au moins une partie des outils de coupe (3, 7) sont réalisés sous forme d'outils rotatifs de tournage.

8. Tête de forage selon l'une des revendications 1 à 7, **caractérisée en ce que** le diamètre de foret actif peut être étendu de 5000 à 8000 mm.

9. Système de forage comprenant un dispositif rotatif et une corde de support (1), **caractérisé en ce que** le système de forage comprend en outre une tête de forage (100) selon l'une quelconque des revendications 1 à 8 qui est couplée à la corde de support (1).
